# EUROPÄISCHE PATENTSCHRIFT

(11) **EP 2 843 359 B1**
(45) Veröffentlichungstag und Bekanntmachung des Hinweises auf die Patenterteilung: **04.05.2016**
(21) Anmeldenummer: 13181679.5
(22) Anmeldetag: 26.08.2013
(51) Int. Cl.: G01B 7/312, F16D 3/10

(54) **Kupplung mit einem antriebseitigen Kupplungsteil und mit einem abtriebseitigen Kupplungsteil**
Coupling with a drive-side coupling part and with an output-side coupling part
Accouplement doté d'une pièce d'accouplement côté entraînement et d'une pièce d'accouplement côté sortie

(43) Veröffentlichungstag der Anmeldung: 04.03.2015
(73) Patentinhaber: Grundfos Holding A/S, 8850 Bjerringbro (DK)
(72) Erfinder: Munk, Flemming, 8800 Viborg (DK)
(74) Vertreter: Patentanwälte Vollmann & Hemmer

(56) Entgegenhaltungen:
- EP-A1- 1 775 492
- WO-A1-2007/052504
- WO-A2-2012/002901
- US-A1- 2013 154 625

## Beschreibung

Die Erfindung betrifft eine Kupplung. Das Dokument US2013/0154625 ist der nächstliegende Stand der Technik.

Bei Maschinen mit Rotationsantrieb ist es wichtig, dass die antriebseitige Welle mit der abtriebseitigen Welle möglichst exakt fluchtet, d. h. dass im Idealfall ihre Drehachsen zusammenfallen. In der Praxis wird dies jedoch praktisch nie erreicht. Es können Fluchtungsfehler auftreten, sei es Versatz, d. h. dass die Drehachsen zwar parallel sind aber nicht übereinstimmen, oder Winkelversatz, d. h. dass die Drehachsen in einem Winkel zueinander stehen (Winkelfehler). In der Praxis treten meist beide Fehler in Kombination auf. Es gilt, diese zu minimieren, um die hierdurch in den Lagern bedingte Radial- und Axialkräfte so gering wie möglich zu halten, um damit Lager, Dichtungen und Kupplungen zu schonen.

In der Praxis erfolgt die Ausrichtung zwischen der Antriebswelle des Motors und der Abtriebswelle einer Maschine beim Stillstand der Maschine, was jedoch systembedingt nachteilig ist. Im Stillstand unterliegt die Maschine nur statischen Einflüssen, im Betrieb jedoch dynamischen Einflüssen, die um ein Vielfaches höher sein können. Auch stellen sich Lagerspalten im Betrieb anders ein als im Stillstand.

Vor diesem Hintergrund liegt der Erfindung die Aufgabe zugrunde, eine gattungsgemäße Kupplung so auszubilden, dass Winkel- und/oder Versatzfehler zwischen Antrieb und Abtrieb während des Betriebs erfasst werden können. Dabei soll die Kupplung so ausgebildet sein, dass sie in einfacher Weise zwischen Antrieb und Abtrieb eingliederbar ist.

Diese Aufgabe wird gemäß der Erfindung durch eine Kupplung mit den in Anspruch 1 angegebenen Merkmalen gelöst. Vorteilhafte Ausgestaltungen sind in den Unteransprüchen, der nachfolgenden Beschreibung und der Zeichnung angegeben. Hierbei können gemäß der Erfindung die in den Unteransprüchen und der Beschreibung angegebenen Merkmale jeweils für sich aber auch in geeigneter Kombination die erfindungsgemäße Lösung gemäß Anspruch 1 weiter ausgestalten.

Die erfindungsgemäße Kupplung weist einen antriebseitigen Kupplungsteil und einen abtriebseitigen Kuppungsteil auf, die begrenzt beweglich und momentübertragend miteinander verbunden sind. Gemäß der Erfindung ist ein Kupplungsteil fest mit einem stabförmigen Körper verbunden, der sich in Richtung der Drehachse der Kupplung erstreckt und der von einem fest mit dem anderen Kupplungsteil verbundenen Hohlkörper umgeben ist, wobei Sensormittel vorgesehen sind, mit denen der radiale Abstand zwischen dem stabförmigen Körper und dem Hohlkörper während des Drehens der Kupplung erfassbar ist.

Grundgedanke der erfindungsgemäßen Kupplung ist es, zwei Kupplungsteile vorzusehen, die begrenzt beweglich zueinander so angeordnet sind, sodass sie sowohl Versatz- als auch Winkelfehler haben können, jedoch das Drehmoment zwischen Antriebsseite und Abtriebseite übertragen. Diesen beiden Kupplungsteilen ist jeweils ein sich im Wesentlichen in Richtung der Drehachse bzw. parallel dazu erstreckendes Bauteil zugeordnet, welches fest mit dem jeweiligen Kupplungsteil verbunden ist. Dabei sind zwischen diesen Bauteilen Sensormittel vorgesehen, welche deren Abstand zueinander, insbesondere deren radialen Abstand zueinander, während des Betriebs erfassen und auf diese Weise auch sich drehwinkelabhängig verändernde Versatz- oder Winkelfehler während des Betriebs erfassen können.

Unter Hohlkörper im Sinne der Erfindung ist dabei jeder Körper zu verstehen, der den stabförmigen Körper an zwei oder mehr Stellen umgibt. Ein Hohlkörper in diesem Sinne kann beispielsweise auch ein gabelförmiger Körper sein, zwischen dessen Zinken der rohrförmige Körper angeordnet ist.

Mit der erfindungsgemäßen Kupplung können während des Betriebs der Maschine, also auch im Belastungszustand, Versatz- und Winkelfehler zwischen Antrieb und Abtrieb ermittelt werden. Die erfindungsgemäße Kupplung kann als gesondertes Bauteil zum Ausrichten von Maschinenteilen zueinander oder zur Erfassung der Lageveränderung von Antriebs- und Antriebswellen im Betrieb zueinander dienen, jedoch auch fester Bestandteil einer Maschine sein, um während des Betriebs Winkelfehler und/oder Versatz zu überwachen.

Um sowohl Winkelfehler als auch Versatzfehler gleichzeitig erfassen zu können, sind gemäß einer Weiterbildung der Erfindung vorteilhaft Sensormittel an mindestens zwei axial beanstandeten Stellen vorgesehen, welche den radialen Abstand zwischen dem stabförmigen Körper und dem Hohlkörper erfassen.

Um insbesondere Winkel- und Versatzfehler voneinander unterscheiden zu können, ist es vorteilhaft, wenn die Sensormittel zwei beabstandete Gruppen von Abstandssensoren aufweisen, welche den Abstand zwischen dem Hohlkörper und dem stabförmigen Körper erfassen.

Besonders vorteilhaft ist es, wenn gemäß einer Weiterbildung der Erfindung eine Gruppe von Abstandssensoren mindestens zwei, vorzugsweise um 90° bezogen auf die Drehachse winkelversetzt zueinander angeordnete Abstandssensoren aufweist, mit denen während der Rotation der Kupplung der Abstand zwischen Hohlkörper und stabförmigen Körper ständig ermittelt und somit sowohl Versatz- als auch Winkelfehler drehwinkelabhängig ermittelt werden können. Eine besonders hohe Genauigkeit der Messergebnisse wird erreicht, wenn jede Gruppe von Abstandsensoren drei oder mehr vorzugsweise im gleichen Winkelabstand um die Drehachse verteilt angeordnete Abstandsensoren aufweist.

Vorteilhaft können als Abstandsensoren Wirbelstromsensoren eingesetzt werden, wobei der zu detektierende Körper dann elektrisch leitend sein muss. Dabei können die Sensoren entweder auf dem stabförmigen Körper angeordnet werden oder, was vorteilhafter ist, innerhalb des Hohlkörpers, um den Abstand zwischen Hohlkörper bzw. dem Sensor und dem stabförmigen Körper zu erfassen. Solche Abstandsensoren sind unempfindlich gegenüber Medien im Messspalt, beispielsweise Staub, Öl, Wasser oder dergleichen. Sie messen berührungslos den Abstand und geben ein stabiles Signal ab, welches elektronisch einfach auszuwerten ist.

Dabei kann die Signalverarbeitung und Auswertung entweder innerhalb der Kupplung aber auch stationär außerhalb erfolgen. Gemäß einer Weiterbildung der Erfindung ist vorteilhaft innerhalb der Kupplung eine Auswertelektronik vorgesehen, die vorzugsweise micropozessorbasiert ist und welche die Sensorsignale erfasst und auswertet und einen etwaigen radialen Versatz und/oder Winkelversatz (Winkelfehler) zwischen den Kupplungsteilen ermittelt. Es versteht sich, dass dieser Versatz drehwinkelabhängig ermittelt werden kann und dass entsprechende Speichermittel vorgesehen sein können, sodass auch eine zeitlich kontinuierliche oder in Abständen erfolgende Erfassung ausgewertet und registriert werden kann.

Wenn auf eine solche Auswertelektronik innerhalb der Kupplung verzichtet werden soll, dann ist es vorteilhaft, Mittel zur drahtlosen Übertragung der von den Abstandssensoren abgegebenen Signale vorzusehen. Bei Wirbelstromsensoren kann dies vorteilhaft durch analoge Signalübertragung erfolgen, wodurch der in der Kupplung erforderliche Elektronikaufwand minimal gehalten wird.

Wenn innerhalb der Kupplung die Auswertelektronik angeordnet ist, dann ist es zweckmäßig, Mittel zur drahtlosen Übertragung der Auswertelektronik nach außen, vorzugsweise zu einem stationären oder mobilen Empfänger vorzusehen. Eine solche Datenübertragung erfolgt vorzugsweise digital. Dabei kann die Datenübertragung kontinuierlich oder durch einen Speicher gepuffert in zeitlichen Abständen erfolgen. Zur Stromversorgung ist vorteilhaft innerhalb der Kupplung eine elektrische Versorgungseinrichtung, typischerweise eine Batterie oder ein Akku vorgesehen. Eine solche Versorgungseinrichtung wird vorteilhaft in dem Kupplungsteil vorgesehen, an welchem die Sensoren angeordnet sind. Dabei kann die elektrische Versorgungseinrichtung durch einen Energiespeicher, wie beispielsweise eine Batterie oder einen Akku, gebildet sein oder auch, gegebenenfalls auch zusätzlich, durch einen Generator oder eine induktive Versorgung von außen.

Die Erfindung ist nachfolgend anhand eines in der Zeichnung dargestellten Ausführungsbeispiels näher erläutert. Es zeigen:
- Fig. 1: in stark vereinfachter schematischer Darstellung den grundsätzlichen Aufbau der erfindungsgemäßen und aus zwei Kupplungsteilen bestehenden Kupplung,
- Fig. 2: in perspektivischer Darstellung die Kupplung in montiertem Zustand,
- Fig. 3: die Kupplung gemäß Fig. 2 in Explosionsdarstellung,
- Fig. 4: eine perspektivische Darstellung eines Längsschnitts durch einen Teil der Kupplung,
- Fig. 5: eine perspektivische Darstellung eines Querschnitts der Kupplung im Bereich, in dem das Drehmoment übertragen wird,
- Fig. 6: die Anordnung einer Sensorgruppe in Querschnittsdarstellung und
- Fig. 7: drei mögliche Anordnungen der Kupplungsteile zueinander.

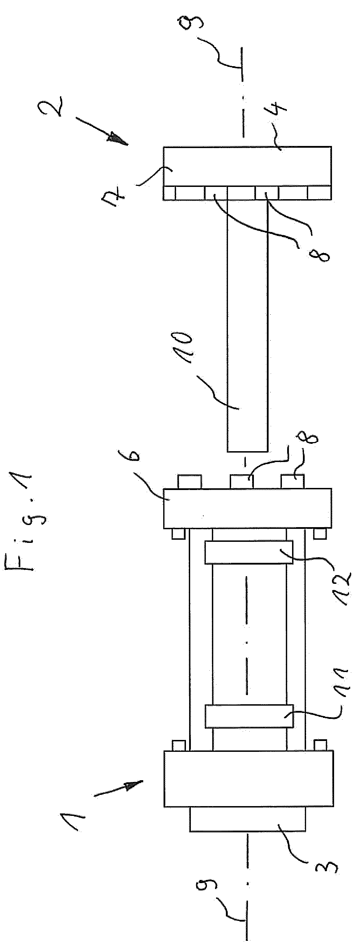

Der grundsätzliche Aufbau der Kupplung ist anhand von Fig. 1 dargestellt. Die Kupplung besteht aus einem antriebseitigen Kupplungsteil 1 und einem abtriebseitigen Kupplungsteil 2. Das antriebseitige Kupplungsteil 1 weist an seinem freien Ende einen Anschluss 3 zur festen Verbindung mit beispielsweise der Welle eines Antriebsmotors auf. Der abtriebseitige Kupplungsteil weist entsprechend an seinem freien Ende einen Anschluss 4 zum Verbinden mit einer Abtriebswelle, beispielsweise einer Kreiselpumpe, auf. Die Anschlüsse 3 und 4 sind hier nur beispielhaft zu verstehen, grundsätzlich kann auch der antriebseitige Kupplungsteil 1 mit einer Abtriebswelle und der abtriebseitige Kupplungsteil 2 mit einer Antriebswelle verbunden werden.

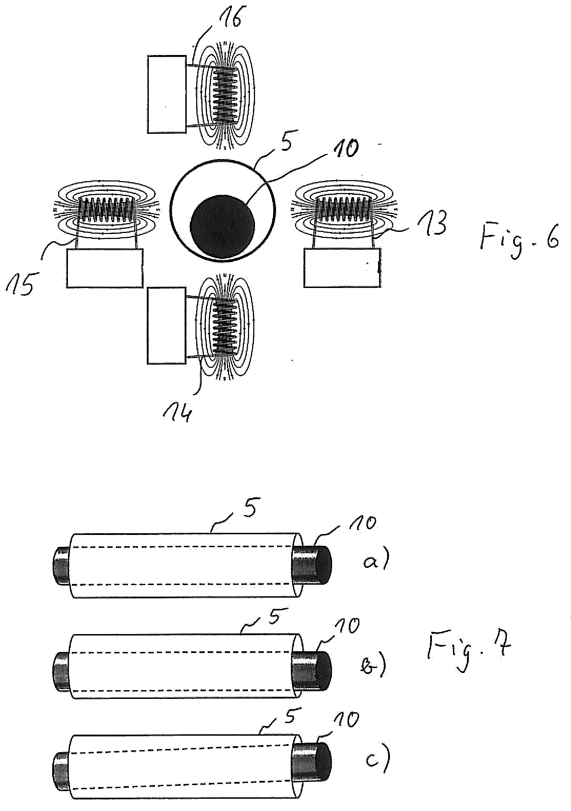

Der Kupplungsteil 1 ist über einen rohrförmigen Körper 5 mit dem einen Teil einer Klauenkupplung 6 verbunden, deren anderer Teil 7 an dem abtriebseitigen Kupplungsteil 2 gebildet ist, und zwar im Bereich des Anschlusses 4, jedoch auf der davon abgewandten Seite. Der Teil 6 der Klauenkupplung weist axial vorspringende Klauen 8 auf, die gegenüberliegend mit Spiel in den Teil 7 eingreifen, sodass zwar einerseits eine Drehmomentübertragung zwischen den Teilen 6 und 7 der Klauenkupplung sichergestellt ist, andererseits sowohl ein radialer Versatz der Teile 6 und 7 und damit auch der Kupplungsteile 1 und 2 zueinander möglich ist, als auch ein Winkelversatz, jeweils bezogen auf die ideale Längsachse 9 der Kupplung. Wenn die Kupplungsteile 6 und 7 mit ihren Klauen 8 ineinandergreifen, ist sowohl ein Winkelversatz wie anhand der Fig. 7c schematisch dargestellt ist, als auch ein radialer Versatz, wie er anhand der Fig. 7b dargestellt ist, zwischen Antrieb und Abtrieb, also zwischen den Anschlüssen 3 und 4 bzw. den Kupplungsteilen 1 und 2, in Grenzen möglich. Auch eine Kombination dieser Fluchtungsfehler zwischen Antrieb und Abtrieb kann von der Klauenkupplung aufgenommen werden ohne die Drehmomentübertragung wesentlich zu beeinflussen. Es versteht sich, dass die Kupplungsteile 1 und 2 hierzu soweit axial zusammengeschoben, d. h. ineinander eingegliedert, werden, dass die Teile 6 und 7 der Klauenkupplung formschlüssig ineinandergreifen.

Der abtriebseitige Kupplungsteil 2 weist auf der vom Anschluss 4 abgewandten Seite einen stabförmigen Körper in Form eines Zylinderstabes 10 auf, der sich in zusammengebautem Zustand der Kupplung über nahezu die gesamte Länge der Kupplung erstreckt und der in den rohrförmigen Körper 5 des antriebseitigen Kupplungsteil 1 bis nahezu zum Anschluss 3 hineinragt.

Innerhalb des rohrförmigen Körpers 5 sind am Innenumfang mit axialem Abstand zueinander Sensorgruppen 11 und 12 angeordnet, deren Sensoren 13 - 16 über den Umfang gleichmäßig verteilt sind und den Abstand zum Zylinderstab 10 ermitteln.

Wenn im zusammengebauten Zustand der Kupplung der antriebseitige Kupplungsteil 1 mit einem Antriebsmotor und der abtriebseitige Kupplungsteil 2 mit einer Arbeitsmaschine, z. B. einer Kreiselpumpe, verbunden sind, dann wird über diese Sensorgruppen 11 und 12, die in Neutralstellung der Kupplung im gleichen radialen Abstand zur Achse 9 angeordnet sind, der Abstand zum Außenumfang des Zylinderstabs 10 ermittelt. Wenn sich also im Betrieb die aus den Kupplungsteilen 1 und 2 bestehende Kupplung um die Achse 9 dreht und die Kupplungsteile 1 und 2 nicht in idealer Weise fluchten, wie dies anhand von Fig. 1 und 7a dargestellt ist, sondern ein radialer Versatz besteht, wie dies anhand der Fig. 7b dargestellt ist, und/oder ein Winkelversatz besteht, wie dies anhand der Fig. 7c dargestellt ist, dann ändern sich die Abstände der Sensoren 13 - 16 zum Zylinderstab 10 auch während des Drehens. Diese Toleranzen werden innerhalb der Kupplung ausgeglichen, allerdings durch die Sensorgruppen 11 und 12 erfasst, da sich hierdurch der bei fluchtenden Achsen gleiche Abstand zwischen dem Zylinderstab 10 und dem rohrförmigen Körper 5 bzw. den dort angeordneten Sensoren der Sensorgruppen 11 und 12 ändert.

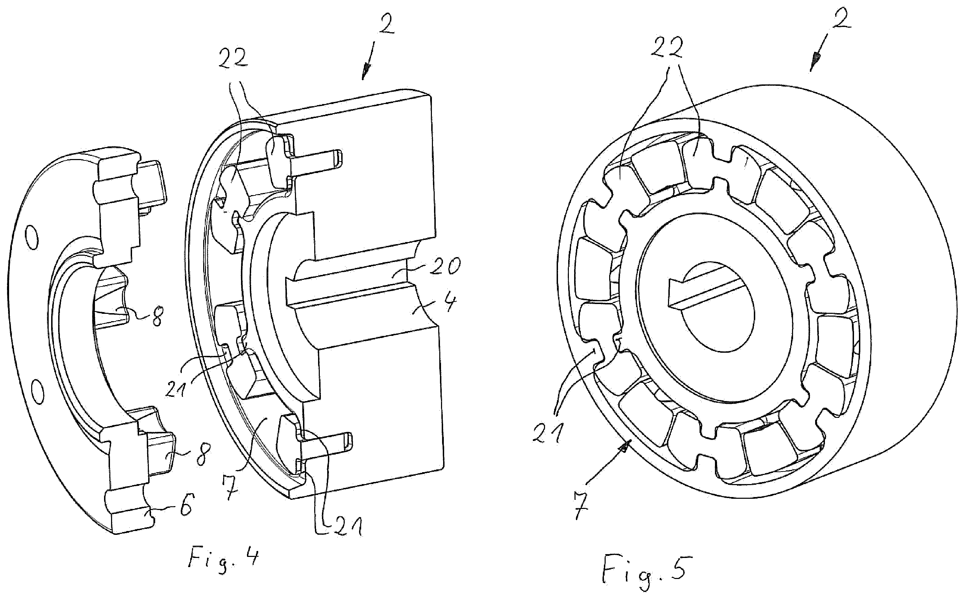

Anhand von Fig. 6 ist dargestellt, wie eine Sensorgruppe 11 bzw. 12 aufgebaut ist. In der dargestellten Ausführung besteht eine Sensorgruppe 11, 12 aus vier in einer Ebene quer zur Achse 9 angeordneten Wirbelstromsensoren 13, 14, 15 und 16, die jeweils im Abstand von 90° bezogen auf die Längsachse 9 symmetrisch um diese am rohrförmigen Körper 5 angeordnet sind. Wie anhand der Fig. 6 dargestellt ist, kann zwar mit einer Gruppe von Sensoren 12 - 15 der sich während der Drehung der Kupplung möglicherweise ändernde Abstand zwischen dem Zylinderstab 10 und dem rohrförmigen Körper 5 ermittelt werden, jedoch ist anhand dieser Daten nicht ermittelbar, ob es sich dabei um einen radialen Versatz oder einen Winkelversatz handelt. Hierzu ist die Messung in zwei axial voneinander beabstandeten Sensorgruppen 11 und 12 erforderlich, die hierüber Aufschluss gibt. Grundsätzlich sind in jeder Sensorgruppe 11, 12 mindestens zwei winkelversetzt angeordnete Sensoren 12 - 16 erforderlich. Bewährt hat sich jedoch die anhand von Fig. 4 dargestellte Anordnung von vier Sensoren 13 - 16 im Winkelabstand von 90°.

Bei der vorstehend beschriebenen Anordnung von vier Sensoren 13 - 16 in zwei Gruppen ist eine besonders einfache und zugleich genaue Messwerterfassung möglich, wenn nämlich zwei gegenüberliegende Sensoren 13 und 15 bzw. 14 und 16 so verschaltet werden, dass sich deren Signal addiert. Da die Abstandsänderungen zwischen Zylinderstab 10 und rohrförmigem Körper 5 auf beiden Seiten stets gleich sind, wird somit bei geeigneter Verschaltung gegenüberliegender Sensoren eine hohe Messgenauigkeit erreicht. Zudem ist der Ausfall oder Defekt eines Sensors sofort erkennbar.

Da der rohrförmige Körper 5 und der Zylinderstab 10 beim Drehen der Kupplung, also wenn die Kupplung das Drehmoment vom Antrieb zum Abtrieb überträgt, drehfest zueinander angeordnet sind, kann gegebenenfalls zur Erfassung der Drehstellung der Kupplung bzw. deren Drehgeschwindigkeit ein zusätzlicher Sensor oder Drehwinkelgeber vorgesehen sein, der in den Figuren jedoch nicht im Einzelnen dargestellt ist.

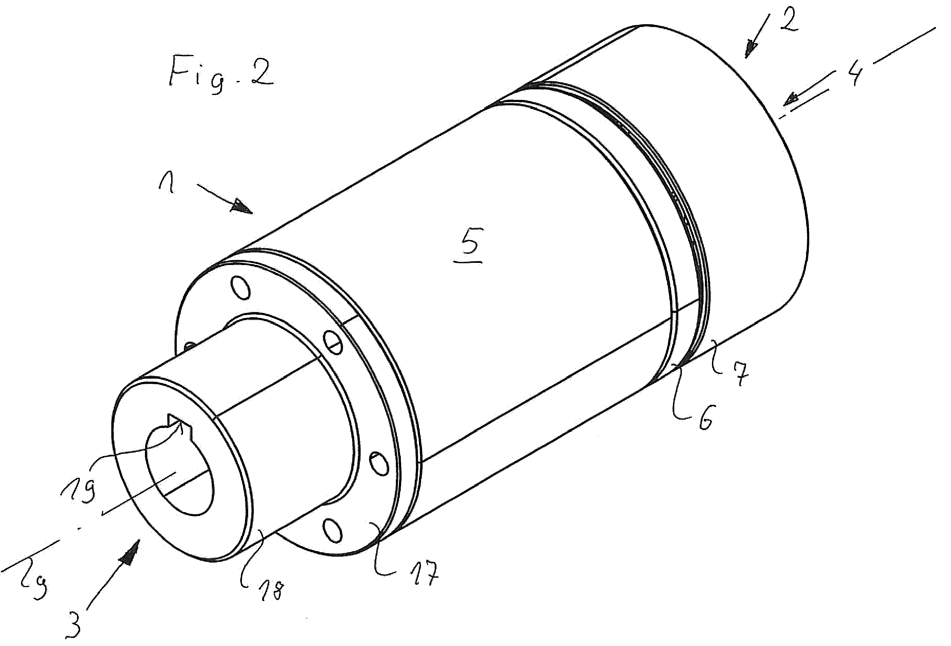

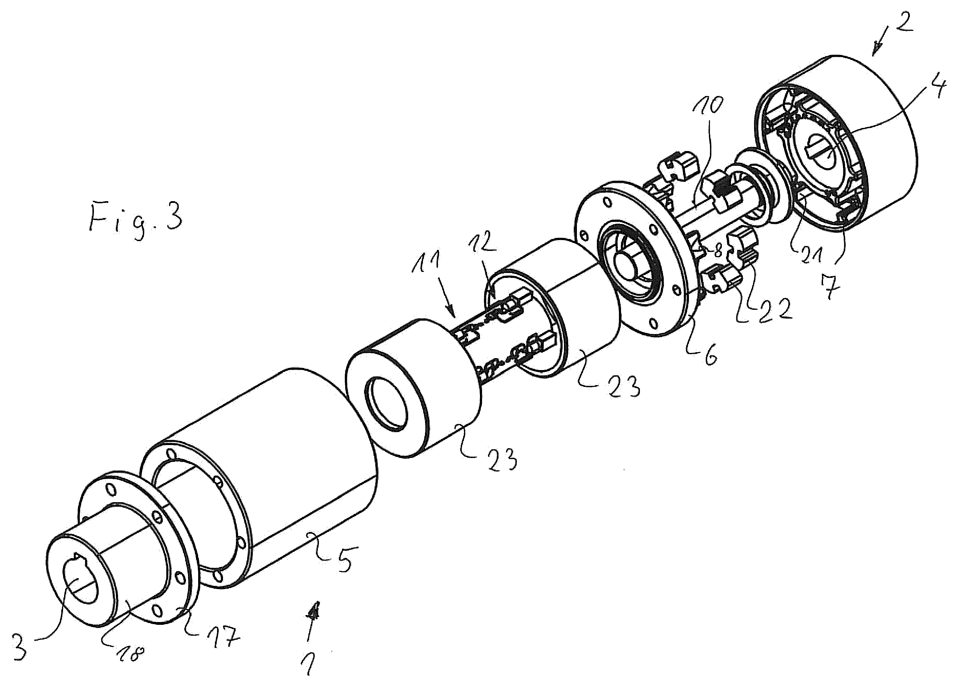

Anhand der Figuren 1, 6 und 7 ist der grundsätzliche Aufbau der Kupplung dargestellt und erläutert worden. Die Figuren 2 - 5 zeigen eine Bauausführung einer so aufgebauten Kupplung.

Bei der dargestellten Bauausführung weist der antriebseitige Kupplungsteil 1 einen Flansch 17 auf, der fest mit einem hohlzylindrischen Abschnitt 18 verbunden ist, an dessen Innenseite eine Längsnut 19 angeordnet ist und der den Anschluss 3 für eine Antriebswelle mit einem Keil bildet, der in einer entsprechenden Ausnehmung am Außenumfang der Welle sowie innerhalb der Längsnut 19 liegt, um die Bauteile in Drehrichtung um die Achse 9 formschlüssig miteinander zu verbinden. Es versteht sich, dass anstatt der dargestellten Keilwellenverbindung hier auch eine Kerbverzahnung oder andere geeignete Wellen-Narben-Verbindung erfolgen kann.

Über den Flansch 17 ist der Anschluss 3 mit dem rohrförmigen Körper 5 verbunden, der hohlzylindrisch ausgebildet ist und zur Drehmomentübertragung zwischen dem Anschluss 3 und dem Teil 6 der Klauenkupplung dient, welcher am anderen Ende des rohrförmigen Körpers 5 angeflanscht ist. Dieser Teil 6 der Klauenkupplung 6 weist von dem Flansch 17, welcher zur Verbindung mit dem rohrförmigen Körper 5 vorgesehen ist, in entgegengesetzter Richtung vorspringende Klauen 8 auf, die zur Drehmomentübertragung zum Teil 7 der Klauenkupplung dienen.

Der Aufbau der Klauenkupplung ist anhand der Figuren 4 - 5 erkennbar. Der abtriebseitige Kupplungsteil 2 weist eine im Wesentlichen hohlzylindrische Form auf und an seiner Innenseite ebenfalls eine Längsnut 20, sodass der Anschluss 4 für die abtriebseitige Welle in gleicher Weise ausgebildet ist wie der Anschluss 3 für die antriebseitige Welle. Die Kupplung kann also in beliebiger Weise zwischen An- und Abtriebswelle angeordnet werden. In dem abtriebseitigen Kupplungsteil 2 ist der Teil 7 der Klauenkupplung integriert. Hierzu ist in den hohlzylindrischen Teil eine ringförmige Nut eingelassen, in deren begrenzenden Wandungen jeweils paarweise radiale Vorsprünge 21 angeordnet sind, die zur Aufnahme von im Querschnitt etwa Doppel-T-förmigen Formelementen 22 dienen, welche aus einem dämpfenden Werkstoff, hier Hartgummi, bestehen und für einen Formschluss zwischen den Vorsprüngen 21 einerseits und den zwischen benachbarten Formschlusselementen 22 eingreifenden Klauen 8 des Teils 6 der Klauenkupplung andererseits dienen. Durch diese Anordnung ist sichergestellt, dass eine Drehmomentübertragung zwischen antriebseitigem Kupplungsteil 1 und abtriebseitigem Kupplungsteil 2 erfolgt, jedoch im Bereich der Klauenkupplung ausreichend Spiel besteht, um sowohl einen radialen Versatz als auch einen Winkelversatz zwischen den Teilen 6 und 7 der Klauenkupplung und damit zwischen dem antriebseitigen Kupplungsteil 1 und dem abtriebseitigen Kupplungsteil 2 zuzuleiten.

Da die den Anschluss 4 bildende Bohrung mit der Nut 20 durchgehend ausgebildet ist, ist diese nicht nur zum Anschluss der Abtriebswelle sondern zum inneren der Kupplung hin auch zur Befestigung des Zylinderstabs 10 vorgesehen, der an seinem Ende entsprechend ausgebildet ist.

Innerhalb des rohrförmigen Körpers 5 ist ein hohlzylindrisches Innengehäuse 23 fest angeordnet, welches mit axialem Abstand die beiden Sensorgruppen 11 und 12 jeweils bestehend aus den Sensoren 13 - 16 trägt. Die Sensoren liegen somit geschützt in einem geschlossenen Kunststoffgehäuse, wohingegen die übrigen Bauteile der Kupplung aus Metall bestehen. Innerhalb dieses Innengehäuses 23 ist auch die hier nicht im Einzelnen dargestellte Auswertelektronik sowie ein datenübertragender Sender integriert. Da die Kupplung zur Versatzmessung im Betrieb vorgesehen ist, wird die zum Betrieb der Elektronik erforderliche Energie durch die Rotation der Kupplung selbst erzeugt, was insbesondere bei hohen Drehzahlen den Vorteil hat, dass keine Unwucht erzeugende Batterie verbaut werden muss. Dabei kann die Energie entweder durch Anordnung von Magneten und Spulen induktiv oder alternativ piezoelektrisch erzeugt werden, indem die beim Rotieren entstehenden Schwingungen auf einen Piezokristall übertragen werden, der hierdurch Energie erzeugt.

### Bezugszeichenliste

- 1: antriebseitiger Kupplungsteil
- 2: abtriebseitiger Kupplungsteil
- 3: Anschluss für die Antriebswelle
- 4: Anschluss für die Abtriebswelle
- 5: rohrförmiger Körper
- 6: Teil der Klauenkupplung
- 7: Teil der Klauenkupplung
- 8: Klauen
- 9: Längsachse
- 10: Zylinderstab
- 11: Sensorgruppe
- 12: Sensorgruppe
- 13: Wirbelstromsensoren
- 14: Wirbelstromsensoren
- 15: Wirbelstromsensoren
- 16: Wirbelstromsensoren
- 17: Flansch
- 18: hohlzylindrisches Bauteil
- 19: Längsnut in 18
- 20: Längsnut
- 21: Vorsprünge
- 22: Formschlusselemente
- 23: Innengehäuse

## Patentansprüche

1. Kupplung mit einem antriebseitigen Kupplungsteil (1) und mit einem abtriebseitigen Kupplungsteil (2), die begrenzt beweglich und momentübertragend miteinander verbunden sind, wobei ein Kupplungsteil (2) einen fest damit verbundenen stabförmigen Körper (10) aufweist, der sich in Richtung der Drehachse (9) der Kupplung erstreckt und der von einem fest mit dem anderen Kupplungsteil (1) verbundenen Hohlkörper (5) umgeben ist, und Sensormittel (11, 12) vorgesehen sind, mit denen der radiale Abstand zwischen dem stabförmigen Körper (10) und dem Hohlkörper (5) während des Drehens der Kupplung erfassbar ist, **dadurch gekennzeichnet, dass** die Sensormittel (11, 12) an mindestens zwei axial beabstandeten Stellen den radialen Abstand zwischen dem stabförmigen Körper (10) und dem Hohlkörper (5) erfassen.

2. Kupplung nach Anspruch 1, **dadurch gekennzeichnet, dass** die Sensormittel zwei axial beabstandete Gruppen (11, 12) von Abstandssensoren (13 - 16) aufweisen.

3. Kupplung nach Anspruch 2, **dadurch gekennzeichnet, dass** eine Gruppe (11, 12) von Abstandssensoren (13 - 16) mindestens zwei, vorzugsweise um 90° bezogen auf die Drehachse winkelversetzt zueinander angeordnete Abstandssensoren (13 - 16) aufweist.

4. Kupplung nach Anspruch 2, **dadurch gekennzeichnet, dass** eine Gruppe (11, 12) von Abstandssensoren drei oder mehr vorzugsweise in gleichem Winkelabstand um die Drehachse (9) verteilt angeordnete Abstandssensoren aufweist.

5. Kupplung nach einem der Ansprüche 2 bis 4, **dadurch gekennzeichnet, dass** die Abstandssensoren (13 - 16) Wirbelstromsensoren sind.

6. Kupplung nach einem der Ansprüche 2 bis 5, **dadurch gekennzeichnet, dass** die Abstandssensoren (13 - 16) am Hohlkörper (5) angeordnet sind.

7. Kupplung nach einem der vorhergehenden Ansprüche, **dadurch gekennzeichnet, dass** innerhalb der Kupplung eine vorzugsweise microprozessorbasierte Auswertelektronik vorgesehen ist, welche die Sensorsignale erfasst und auswertet und einen etwaigen radialen und/oder Winkelversatz zwischen den Kupplungsteilen (1, 2) ermittelt.

8. Kupplung nach einem der vorhergehenden Ansprüche, **dadurch gekennzeichnet, dass** Mittel zur drahtlosen vorzugsweise analogen Übertragung der von den Abstandssensoren (13 - 16) abgegebenen Signalen vorgesehen sind.

9. Kupplung nach einem der vorhergehenden Ansprüche, **dadurch gekennzeichnet, dass** Mittel zur vorzugsweise drahtlosen Übertragung von Daten der Auswerteelektronik vorgesehen sind.

10. Kupplung nach einem der vorhergehenden Ansprüche, **dadurch gekennzeichnet, dass** in der Kupplung eine elektrische Versorgungseinrichtung vorgesehen ist.

11. Kupplung nach einem der Ansprüche 6 bis 9, **dadurch gekennzeichnet, dass** innerhalb der Kupplung ein Energiespeicher, insbesondere eine elektrische Batterie zur Versorgung der Sensormittel (11, 12) und/oder Auswertelektronik sowie der Übertragungselektronik vorgesehen ist.

## Claims

1. A coupling with a drive-side coupling part (1) and with a driven-side coupling part (2), which are connected to one another in a limitedly movable and torque-transmitting manner, **characterised in that** one coupling part (2) comprises a rod-like body (10) which is fixedly connected thereto, extends in the direction of the rotation axis (9) of the coupling and is surrounded by a hollow body (5) fixedly connected to the other coupling part (1), wherein sensor means (11, 12) are provided, with which the radial distance between the rod-like body (10) and the hollow body (5) during rotation of the coupling is detected, **characterised in that** the sensor means (11, 12) detect the radial distance between the rod-like body (10) and the hollow body (5), at at least two axially distanced locations.

2. A coupling according to claim 1, **characterised in that** the sensor means comprise two axially distanced groups (11, 12) of distance sensors (13 - 16).

3. A coupling according to claim 2, characterised that a group (11, 12) of distance sensors (13 - 16) comprises at least two distance sensors (13 - 16) which are arranged angularly offset to one another, preferably by 90° with respect to the rotation axis

4. A coupling according to claim 2, **characterised in that** a group (11, 12) of distance sensors comprises three or more distance sensors which are arranged distributed preferably at an equal angular distance, about the rotation axis (9).

5. A coupling according to one of the claims 2 to 4, **characterised in that** the distance sensors (13 - 16) are eddy current sensors.

6. A coupling according to one of the claims 2 to 5, **characterised in that** the distance sensors (13- 16) are arranged at the hollow body (5).

7. A coupling according to one of the preceding claims, **characterised in that** evaluation electronics preferably based on microprocessor are provided within the coupling and acquire and evaluate the sensor signals and determine any radial and/or angular offset between the coupling parts (1,2).

8. A coupling according to one of the preceding claims, **characterised in that** means for the wireless, preferably analog transmission of the signals issued by the distance sensors (13 - 16) are provided.

9. A coupling according to one of the preceding claims, **characterised in that** means for the preferably wireless transmission of data of the evaluation electronics are provided.

10. A coupling according to one of the preceding claims, **characterised in that** an electrical supply device is provided in the coupling.

11. A coupling according to one of the claims 6 to 9, **characterised in that** an energy storage device, in particular an electrical battery, for the supply of the sensor means (11, 12) and/or of evaluation electronics as well as of the transmission electronics, is provided within the coupling.

## Revendications

1. Accouplement doté d'une pièce d'accouplement côté entraînement (1) et d'une pièce d'accouplement côté sortie (2) reliées l'une à l'autre de manière limitée mobile et de façon à transmettre un couple, une pièce d'accouplement (2) comprenant un corps (10) en forme de tige rigidement attaché à ladite pièce (2) et s'étendant dans la direction de l'axe de rotation (9) de l'accouplement et qui est entouré d'un corps creux (5) rigidement attaché à l'autre pièce d'accouplement (1), et des moyens capteurs (11, 12) état prévus à l'aide desquels la distance radiale entre le corps (10) en forme de tige et le corps creux (5) peut être captée pendant la rotation de l'accouplement, **caractérisé en ce que** les moyens capteurs (11, 12) captent la distance radiale entre le corps (10) en forme de tige et le corps creux (5) à au moins deux endroits axialement espacés.

2. Accouplement selon la revendication 1, **caractérisé en ce que** les moyens capteurs comprennent deux groupes (11, 12) axialement espacés de capteurs de distance (13 à 16).

3. Accouplement selon la revendication 2, **caractérisé en ce qu'**un groupe (11, 12) de capteurs de distance (13 à 16) comprend au moins deux capteurs de distance (13 à 16) angulairement décalés l'un par rapport à l'autre de, de préférence, 90° par rapport à l'axe de rotation.

4. Accouplement selon la revendication 2, **caractérisé en ce qu'**un groupe (11, 12) de capteurs de distance comprend trois ou davantage de capteurs de distance disposés à espacement angulaire égal autour de l'axe de rotation (9).

5. Accouplement selon l'une des revendications 2 à 4, **caractérisé en ce que** les capteurs de distance (13 à 16) sont des capteurs à courants de Foucault.

6. Accouplement selon l'une des revendications 2 à 5, **caractérisé en ce que** les capteurs de distance (13 à 16) sont disposés sur le corps creux (5).

7. Accouplement selon l'une des revendications précédentes, **caractérisé en ce que**, à l'intérieur de l'accouplement, il est prévu une électronique d'exploitation, de préférence à base de microprocesseur, qui saisit et exploite les signaux des capteurs et détermine un décalage éventuel radial et/ou angulaire entre les pièces d'accouplement (1, 2).

8. Accouplement selon l'une des revendications précédentes, **caractérisé en ce qu'**il est prévu des moyens pour la transmission sans fil, de préférence analogue, des signaux sortis des capteurs de distance (13 à 16).

9. Accouplement selon l'une des revendications précédentes, **caractérisé en ce qu'**il est prévu des moyens pour la transmission, de préférence sans fil, de données de l'électronique d'exploitation.

10. Accouplement selon l'une des revendications précédentes, **caractérisé en ce que**, à l'intérieur de l'accouplement, un dispositif d'alimentation électrique est prévu.

11. Accouplement selon l'une des revendications 6 à 9, **caractérisé en ce que**, à l'intérieur de l'accouplement, un accumulateur d'énergie, notamment une batterie électrique, est prévu pour l'alimentation des moyens capteurs (11, 12) et/ou de l'électronique d'exploitation et de l'électronique de transmission.
